# EUROPEAN PATENT SPECIFICATION

(11) **EP 2 201 636 B1**
(45) Date of publication and mention of the grant of the patent: **14.08.2013**
(21) Application number: 08789928.2
(22) Date of filing: 14.08.2008
(51) Int. Cl.: H01M 8/10, B01D 67/00, B01D 69/14

(54) **PROTON CONDUCTING POLYMER ELECTROLYTE MEMBRANE USEFUL IN POLYMER ELECTROLYTE MEMBRANE FUEL CELLS**
PROTONENLEITENDE POLYMERE ELEKTROLYTMEMBRAN VERWENDBAR IN BRENNSTOFFZELLEN MIT POLYMER-ELEKTROLYT-MEMBRAN
MEMBRANE D'ÉLECTROLYTE POLYMÈRE CONDUCTRICE DE PROTONS UTILE DANS DES PILES À COMBUSTIBLE À ÉLECTROLYTE POLYMÈRE

(30) Priority: 29.08.2007 IN DE18312007
(43) Date of publication of application: 30.06.2010
(73) Proprietor: Council of Scientific & Industrial Research, New Delhi 110 001 (IN)
(72) Inventor: SHUKLA, Ashok, Kumar, Karaikudi 630 006 Tamil Nadu (IN); PITCHUMANI, Sethuraman, Karaikudi 630 006 Tamil Nadu (IN); SRIDHAR, Parthasarathi, Karaikudi 630 006 Tamil Nadu (IN); SAHU, Akhila, Kumar, Karaikudi 630 006 Tamil Nadu (IN); SELVARANI, Ganesh, Karaikudi 630 006 Tamil Nadu (IN); KHADKE, Prashant, Subhash, Karaikudi 630 006 Tamil Nadu (IN)
(74) Representative: Maiwald, Walter
(86) International application number: PCT/IN2008/000512
(87) International publication number: WO 2009/027993

(56) References cited:
- WO-A-2007/082350
- US-A1- 2004 157 131

## Description

### Field of the invention

The present invention relates to a process for the preparation of a proton conducting polymer electrolyte membrane a hybrid proton conducting polymer electrolyte membrane obtainable by the process, and, to uses thereof. More particularly the present description describes a conducting hybrid polymer electrolyte membrane comprising a stable host polymer and a proton-conducting medium as a guest polymer for its suitability in PEM-based fuel cells. The present specification deals with host polymer, comprising a group of poly (vinyl alcohol), poly (vinyl fluoride), polyethylene oxide, polyethyleneimine, polyethylene glycol, cellulose acetate, polyvinylmethylethyl ether, more preferably poly(vinyl alcohol and a guest polymer comprising poly (styrene sulfonic acid), poly(acrylic acid), sulfonated phenolic, polyacrylonitrile, polymethyl acrylite, and quaternary ammonium salt, more preferably poly(styrene sulfonic acid).

### Background of the invention.

The strong interest In the Polymer Electrolyte Membrane Fuel Cells (PEMFCs) stems from the advantages of using a solid polymer electrolyte. The solid polymer electrolyte must be thin and electronically insulating. It also has to act as a gas barrier between the two electrodes while allowing rapid proton transport in a charge-transfer reaction. Once put in place, the polymer electrolyte membrane does not redistribute, diffuse, or evaporate, thus producing easy operation of fuel cells. For fuel cell applications, polymer electrolyte membrane should have high ionic-conductance, high mechanical strength, good chemical, electrochemical and thermal stability under operating conditions. In conventional PEMFCs, the polymer electrolyte membrane is made of one or more fluorinated polymers, for example, Nafion^{®}, a perfluorosulfonic acid polymer. The fuel cells comprising Nafion^{®} membrane should be operated at moderate temperatures and at fully wet-conditions. However, the ionic conductivity of the Nation^{®} membrane is reduced at elevated temperatures and low relative humidity values, which affects the fuel cell performance. Besides, Nafion^{®} is expensive and has involved synthetic procedure. The multi-step process and incorporation of rare ionomer makes Nafion^{®} membranes cost intensive. Based on the prevailing market price of 500 to 1000 US$/m², the use of Nafion^{®} membranes is prohibitive for its early commercialization in fuel cell applications. This has sparked interest in developing cost-effective alternative proton conducting polymer membranes to replace Nafion^{®} membranes.

US Pat. No. 6,465,120 discloses a solid polymer composite membrane having good proton conductivity with barrier to methanol cross-over obtained by allowing aniline to be adsorbed on to a perfluorosulfonic acid polymer membrane followed by oxidative polymerization of aniline at about - 4°C using ammonium peroxodisulfate. But, the cost of this composite membrane remains as high as Nafion^{®} and the observed proton conductivity of the membrane happens to be lower in particular at elevated temperatures.

In attempting to achieve a significant reduction in the cost of the membrane electrolyte, efforts have been made to develop cheaper polymeric materials. Radiation grafted membranes are an example of partially fluorinated polymer membranes with lower cost than Nafion^{®}-based materials. These membranes, made by cross-linking a backbone, such as poly tetrafluoroethylene, with a functional side chain by beta (electron) or gamma radiation have shown good performance at less than 60°C. However, due to the prevailing oxidative ambience within the fuel cell, its application in fuel cells is limited to lower temperatures.

Polymer/inorganic mineral acid composite membranes, such as polybenzimidazole (PBI)/H₃PO₄, exhibit high proton conductivity at around 140°C as described in the article entitled, "Acid-Doped Polybenzimidazoles: A New Polymer Electrolyte" by J. S. Wainright et al., in the Journal of the Electrochemical Society, 142 (1995) 121-123. However, phosphoric acid doped PBI membranes are prone to acid leach out that results in decreased proton conductivity.

The electrophilic aromatic sulfonated poly (ether ether ketone) (SPEEK) is also a promising proton conducting polymer. The sulfonation process is limited to SPEEK preparation with a compromise between proton conductivity and mechanical integrity of the membrane. Besides, the membrane shows excessive swelling property making it mechanically fragile and prone to loss of functionalities and proton conductivity at elevated temperatures due to degradation of sulfonic acid groups limiting its use in fuel cells as described in the review article entitled, "Recent development on ion-exchange membranes and electro-membrane processes", by R.K. Nagarale et al., published in Advances in Colloid and Interface Science, 119 (2006) 97-130. To mitigate swelling, several attempts have been made by using suitable cross-linking agents or blending the polymer with polyamide (PA), poly (etherimine) (PEI), etc.

Acid-base polymer complexes comprising poly(acrylamide) (PAAM) and H₃PO₄ or H₂SO₃ exhibit high proton conductivity in the range between 10⁻⁴ and 10⁻³ S/cm at ambient temperatures. The proton conductivity increases with temperature to about 10⁻² S/cm at 100°C. However, the mechanical integrity of these polymer complexes is relatively poor, and chemical degradation is often observed on humidification.

Studies on sulfonated poly (ether sulfone) membrane have shown promise for it to be a good proton conducting material. For operating at elevated temperatures, inorganic materials, like silica, are also impregnated in the sulfonated poly (ether sulfone) by sol-gel method as described in the article entitled, "Highly charged proton-exchange membrane: Sulfonated poly (ether sulfone)-silica polymer electrolyte composite membrane for fuel cells", by V.K. Shahi et al., published in Solid State Ionics (2006). However, long-term stability and thermal resistance of this composite membrane for application in fuel cells is lacking.

Poly (vinyl alcohol) (PVA) based membranes have also been studied in both acidic and alkaline environments. Poly (vinyl alcohol) is a versatile polymer and has been proved to be commercially viable in many fields spanning from surface coatings to biomedical applications. But, pristine PVA alone does not meet the required properties and needs to be tailored according to the application. Among the modifications that are viable for PVA, gelation is an effective process and has been successfully used for medical applications. There are plenty of reports available in modulating cross-linking process of PVA moiety. The following are the major inventions on modification of PVA for use in fuel cell applications. PVA membranes doped with phosphotungstic acid (PWA) swell excessively with concomitant reduction in their mechanical strength. PVA-PWA composite membrane impregnated with silica particles shows improvement on endurance and thermal stability as described in the article entitled, "New proton exchange membranes based on poly (vinyl alcohol) for DMFCs", by W. Xu et al., published in Solid State Ionics, 171 (2004) 121-127. PVA cross-linked with sulfosuccinic acid (SSA), a proton conducting material, has also been optimized with proton conductivity ranging between 10⁻³ and 10⁻² S/cm. To retain the good proton conductivity at even elevated temperatures, attempts have also been made to impregnate silica particles to PVA-SSA hybrid membrane via a sol-gel route.

Several studies have also been carried out on the combination of PVA and poly (acrylic acid) PAA. US Pat. 5,371,110 discloses the ion-exchange polymer comprising PVA and PAA with a suitable aldehyde and an acid catalyst to bring about acetalization with cross-linking. It is known that PVA-PAA composite membranes at respective composition ratio of 2:1 exhibit a good balance in their proton conductivity and mechanical properties. Recently, the preparation of PVA-poly (styrene sulfonic acid-co-maleic acid) PVA-PSSA-MA polymer electrolyte composite membrane is reported that controls the membrane charge density, prevents excessive swelling and provides good proton conductivity of about 10⁻² S/cm.

The aforesaid disclosures provide options to transform PVA as only polymeric ionic conductor with only vehicle type mechanism. This requires incorporation of sulfonic acid groups to mimic Nafion^{®} type proton conduction. However, the existing art to introduce sulfosuccinic acid moiety into PVA does not provide this option and remains limited only to cross-linkinage utilizing a donor of the hydrophilic -SO₃H groups. Introduction of free sulfonic acid groups into PVA has also been possible as disclosed in US Pat. 6,523,699 wherein PVA is mixed with sulfoacetic acid and sulfosuccinic acid, and thermally cross-linked at 120°C. The said composite membrane exhibits good proton conductivity and methanol barrier property.

On the other hand, US Pat. 4,537,840 discloses a fuel cell using a gel of a poly (styrenesulfonic acid) as an electrolyte. Such an organic polymer electrolyte absorbs water generated by a reaction inside the fuel cell to swell the membrane. Membrane swelling lowers its mechanical strength with deterioration in its durability as also increases its internal resistance. Besides, the polymer electrolyte redistributes itself and dissolves during the fuel cell operation. In a fuel cell, a membrane electrolyte is held by a frame, but in some cases, it brims over the frame to permeate into the electrode side, which peels due to its swelling.

A combination of PVA and PSSA is therefore envisaged to provide both vehicle type and Grötthus type proton conduction mechanisms. A similar combination has been known for the study of methanol permeation with maleic acid as co-monomer unit of PSSA.

In view of the aforesaid description, the present invention discloses a unique preparation procedure to blend PVA and PSSA, which exhibit both vehicle and Grötthus type proton conduction. The resultant membrane shows good water retention capability along with a barrier to methanol crossover for their operational compatibility in PEM-based fuel cells, the anodes of which are separately fed with gaseous hydrogen, aqueous methanol and alkaline aqueous sodium borohydride.

A fuel cell refers to a device, which produces electricity when provided with a fuel and an oxidant. A Proton Exchange Membrane Fuel Cell (PEMFC) comprises an anode, a cathode and a solid-polymer membrane electrolyte sandwiched between the anode and the cathode. In a simple hydrogen-oxygen fuel cell, the fuel gas is hydrogen and the oxidant gas is oxygen. Hydrogen dissociates into hydrogen ions and electrons at the catalyst surface of the anode. The hydrogen ions pass through the electrolyte while the electrons flow through the external circuit, doing electrical work before forming water at the catalyst surface of the cathode by combining with oxygen.

If the fuel is methanol, the acronym DMFC (Direct Methanol Fuel Cell) is used. In a DMFC methanol is supplied to the anode side, and oxygen to the cathode side, thereby allowing electrochemical reactions to generate electricity. Since the proton transfer through the membrane is associated with transport of water molecules through the membrane, methanol is transferred by the electro-osmotic drag (methanol cross-over) leading to a decreased cell performance. It has also been reported that over 40% methanol can be lost in DMFC across the Nafion^{®} membrane due to its excessive swelling. In order to improve the performance of DMFC, it is mandatory to reduce the loss of methanol across the cell. Besides, it is also necessary to employ a highly proton conducting polymer membrane so as to obtain high power density for the DMFC. Accordingly, in the literature, several researchers have concentrated on the development of a proton conducting membrane having high H⁺- conductivity with mitigated methanol crossover.

When hydrogen is used as fuel in small fuel cells, a convenient way is to store it as chemical hydrides, which have high specific energy as the amount of hydrogen that can be released is higher. A conventional chemical hydride is NaBH₄. A PEM fuel cell directly fueled with aqueous alkaline NaBH₄ is referred as Direct Borohydride Fuel Cell (DBFC). Nafion-961 membrane electrolyte, which is a bi-layered Teflon fiber-reinforced composite membrane with sulfonated and carboxylated polymer layers is generally preferred in a DBFC to mitigate alkali cross-over from the anode to cathode. This Nafion^{®} based material as explained above is expensive and has complicated casting procedure. Therefore, it is desirable to replace Nafion^{®} with cost-effective alternative proton conducting polymer membrane with performance comparable with Nafion^{®}.

In the present invention, a process for fabricating PVA and PVA-PSSA hybrid membrane and its utility to PEM based fuel cells, the anodes of which are separately fed with hydrogen, methanol and sodium borohydride is described. An objective of the present invention is to provide polymer electrolyte membrane exhibiting high proton conductivity and water retention capability for PEFC, barrier to methanol crossover for DMFC and mitigated alkali crossover for DBFC. Another objective of the present invention is to optimize the proton conductivity of PVA by adding appropriate quantity of PSSA. The hydrogen bonds between OH of PVA and SO₃H of PSSA are formed due to the decrease in the distance between the polymer chains. This physical interaction between the functional groups results in the formation of hydrophilic ionic channels (or micro domains) by the arrangement of hydrophilic polymeric groups facilitating proton conduction.

Another objective of the present invention is to test the universality of the optimized PVA-PSSA membrane for application in PEM-based fuel cells, the anodes of which are separately fed with hydrogen, methanol and sodium borohydride.

### Objectives of the invention

The main object of the present invention is to incorporate proton conducting organic groups into the PVA matrix for increasing the proton conductivity and optimizing the hydrophobic-hydrophilic domain to obtain a conducting polymer electrolyte membrane. 6

Another object of the present invention is to incorporate a proton conducting organic group comprising poly (styrene sulfonic acid), poly(acrylic acid), sulfonated phenolic, polyacrylonitrile, polymethyl acrylate, and quaternary ammonium salt, more preferably poly(styrene sulfonic acid) into the PVA matrix to obtain a proton conducting polymer electrolyte membrane.

Another objective of the present invention is to vary poly (styrene sulfonic acid) amount between 10 weight % of and 35 weight % of with respect to PVA and optimize the amount in the PVA matrix.

Yet another objective of the present invention is to set the thickness of the pristine PVA membrane and PVA-PSSA hybrid membrane at about 50 µm to 200 µm, more preferably at 150 µm.

Yet another objective of the present invention is to provide a fuel cell of said proton conducting membrane without a corrosive electrolyte.

Yet another object of the present invention is to provide excellent proton conductivity to the hybrid membrane at varying temperatures between room temperature and 130°C.

Yet another object is to provide excellent proton conductivity to the hybrid membrane at varying relative humidity values between 0% and 100%.

Yet another object is to use the present hybrid membrane in PEM-based fuel cells, the anode of which is fed with gaseous hydrogen.

Yet another object is to provide methanol barrier property desired for PEM-based fuel cell, the anode of which is fed with aqueous methanol solution.

Yet another object to find utility of the hybrid membrane in PEM-based fuel cell, the anode of which is fed with alkaline aqueous sodium borohydride.

Yet another object is to provide a hybrid polymer electrolyte membrane comprising aforesaid sulfonic acid groups in polyvinyl alcohol matrix with affinity for water absorption and its retention at elevated temperatures.

### Summary of the Invention

Accordingly the present specification describes a hybrid proton conducting polymer electrolyte membrane comprising a host polymer chemically cross-linked with a dialdehyde cross-linking agent and a proton conducting guest polymer, wherein the host polymer is poly (vinyl alcohol) and the guest polymer is poly(styrene sulfonic acid) and the said hybrid proton conducting polymer electrolyte membrane has the following characteristics:
(i) thickness of the hybrid membrane is in the range of 50-200 µm;
(ii) possesses high proton conductivity, at a temperature in the range of 30°C and 130°C with PVA-35weight % of PSSA;
(iii) possesses a maximum conductivity at a temperature of 100°C;
(iv) possesses high proton conductivity at 31% relative humidity with PVA- 35weight % of PSSA;
(v) possesses a proton conductivity of 1.66x10⁻² S/cm with PVA-35 weight % of PSSA in a fully humidfied condition at 30°C;
(vi) possesses activation energy (Ea) in the range of 10-16 kJ/mol with PVA-PSSA.

The host polymer used may have a stable morphology.

The host polymer used is preferably poly (vinyl alcohol).

The dialdehyde cross-linking agent used for cross linking the host polymer may be selected from glyoxal and glutaraldeyde.

The guest polymer used may be in the form of sodium salt.

The proton conducting polymer electrolyte membrane is useful for making polymer electrolyte membrane fuel cells.

The proton conducting polymer electrolyte membrane is useful in polymer electrolyte membrane fuel cell where gaseous hydrogen is used as fuel, at a cell temperature of 80°C under humidified condition and at atmospheric pressures.

The proton conducting polymer electrolyte membrane is useful in polymer electrolyte membrane fuel cell where aqueous 2M-methanol solution is used as a fuel, at a cell temperature of 80°C.

The proton conducting polymer electrolyte membrane is useful in polymer electrolyte membrane fuel cell where aqueous alkaline sodium borohydride solution is used as a fuel, at a cell temperature of 30°C.

The present invention provides a process for the preparation of proton conducting polymer electrolyte membrane which comprises preparing an aqueous solution of host polymer, adding gradually an aqueous solution of 20-30% cross-linking agent to the above said solution of host polymer, under stirring, for a period of 3-4 hr to obtain the chemically cross-linked host polymer with dialdehyde cross-tinking agent, adding aqueous solution of the sodium salt of guest polymer to the above said solution of cross-linked host polymer, at a temperature of 25-30°C and stirring it till a homogeneous slurry is obtained and casting the resultant admixture on a smooth flat substrate, followed by removing the solvent and curing it to obtain a hybrid membrane, dipping the resultant hybrid membrane in aqueous solution of about 1M H₂SO₄, at a temperature of 25-30°C, for a period of 30-60 minutes, followed by washing with water to expel the residual H₂SO₄ to obtain the desired hybrid proton conducting polymer electrolyte membrane.

In yet another embodiment the host polymer used is elected from the group consisting of poly (vinyl alcohol) (PVA), poly (vinyl fluoride), polyethylene oxide, polyethyleneimine, polyethylene glycol and polyvinylmethylethyl ether.

In yet another embodiment the dialdehyde cross-linking agent used for cross linking the host polymer is selected from glyoxal and glutaraldehyde.

In yet another embodiment the guest polymer, used is selected from the group consisting of poly(styrene sulfonic acid) (PSSA), poly(acrylic acid), sulfonated phenolic, polyacrylonitrile, polymethyl acrylate, and quaternary ammonium salt.

The hybrid proton conducting polymer electrolyte membrane may have the following characteristics:
(i) thickness of the hybrid membrane is in the range of 50-200 µm;
(ii) possesses high proton conductivity, at a temperature in the range of 30°C and 130°C with PVA-35 weight % of PSSA;
(iii) possesses a maximum conductivity at a temperature of 100°C;
(iv) possesses high proton conductivity at 31% relative humidity with PVA- 35 weight % of PSSA;
(v) possesses a proton conductivity of 1.66x10⁻² S/cm with PVA-35 weight % of PSSA in a fully humidified condition at 30°C;
(vi) possesses activation energy (Ea) in the range of 10-16 kJ/mol with PVA-PSSA.

In the light of the aforesaid, an objective of this invention is to provide a new proton conducting hybrid polymer electrolyte membrane comprising a stable host polymer and a proton-conducting medium as a guest polymer for its suitability in PEM-based fuel cells. The present invention deals with host polymer, comprising a group of poly (vinyl alcohol), poly (vinyl fluoride), polyethylene oxide, polyethyleneimine, polyethylene glycol, cellulose acetate, polyvinylmethylethyl ether, more preferably poly(vinyl alcohol), chemically cross-linked with a dialdehyde cross-linking agent comprising a group of glyoxal, more preferably glutaraldehyde. The process comprises casting the admixture on smooth flat Plexiglass plate, removing the solvent, and curing the resultant membrane that produces a water-insoluble proton-conducting interpenetrating polymer network membrane with stable morphology.

PVA membrane itself does not have any negative charged ions and hence is a poor proton conductor as compared to commercially available Nafion^{®} membrane.

### Brief Description of the Drawings

The present invention will be described with reference to the accompanying drawings, wherein:
Figure 1(a) shows the temperature effect on the proton conductivity of pristine PVA and PVA-PSSA hybrid membranes according to an aspect of the present invention.
Figure 1(b) shows the relative humidity effect on the proton conductivity of pristine PVA and PVA-PSSA hybrid membranes according to an aspect of the present invention.
Figure 2 shows performance curves for PEM-based fuel cells employing pristine PVA and PVA-PSSA hybrid membranes operating at 80°C with gaseous hydrogen fuel and gaseous oxygen as oxidant at atmospheric pressure in an embodiment of the present invention.
Figure 3 shows performance curves for PEM-based fuel cells employing pristine PVA and PVA-PSSA hybrid membranes operating at 80°C with aqueous methanol as fuel and gaseous oxygen as oxidant at three atmosphere absolute pressures in an embodiment of the present invention.
Figure 4 shows performance curves, for pristine PVA and PVA-PSSA hybrid membranes operating at 30°C with alkaline aqueous sodium borohydride as fuel and hydrogen peroxide as oxidant in an embodiment of the present invention.

### Detailed Description of the invention

The present invention provides a new proton conducting polymer electrolyte membrane and its effective utility in polymer electrolyte membrane-based fuel cells with their anodes fed separately with gaseous hydrogen, aqueous methanol solution and alkaline aqueous sodium borohydride solution. A membrane comprises a host polymer that provides stable morphology and the guest polymer that provides high proton conductivity.

The host polymer is selected from the group, comprising poly (vinyl alcohol), poly (vinyl fluoride), polyethylene oxide, polyethyleneimine, polyethylene glycol, polyvinylmethylethyl ether, more preferably poly (vinyl alcohol), with molecular weight of 1,15,000. A 100 ml. of 10 wt.% aqueous poly (vinyl alcohol) solution is prepared by dissolving preweighed amount of PVA in de-ionized water at 90°C followed by its stirring for about 3 h so as to obtain a clear solution. The solution thus obtained is allowed to cool to the room temperature. 2 ml of 25% aqueous glutaraldehyde solution is added gradually followed by stirring for 3 to 4 h for chemically cross-linking PVA with the dialdehyde cross-linking agent. The casting of the admixture thus obtained on smooth flat Plexiglass plate, subsequently removing the solvent, and curing of the resultant membrane produces a water-insoluble PVA membrane of about 150 µm with interpenetrating polymer network. PVA membrane thus produced does not have any negative charged ions and hence is a poor proton conductor as compared with commercially available Nafion^{®} membrane. Accordingly, a guest polymer based on proton conducting organic groups comprising poly (styrene sulfonic acid), poly (acrylic acid), sulfonated phenolic, polyacrylonitrile, polymethyl acrylate, and quaternary ammonium salt, more preferably aqueous solution of poly (styrene sulfonic acid) in the form of sodium salt, is chosen for incorporation into the aforesaid PVA network. A required amount of poly (sodium-poly-styrene sulfonate) dissolved in water is added to the poly (vinyl alcohol) solution. The admixture is stirred at room temperature till homogeneous slurry is obtained. The casting of the resultant slurry by the procedure mentioned in above produces a PVA-PSSA hybrid membrane of thickness almost similar to the PVA membrane. To exchange the Na⁺- ion into the membrane with protons and for further cross-linking the hybrid membrane, it is dipped in aqueous solutions of 1 M H₂SO₄ for about 30 minutes at room temperature. The hybrid membrane is then repeatedly washed with de-ionized water to expel residual H₂SO₄. The hybrid membrane thus obtained exhibits high proton conductivity nearly similar to the commercially available Nafion^{®} membrane and possesses the optimized hydrophobic-hydrophilic character.

As said hereinbefore, the present invention is concerned with membranes of a homogeneous thin film and water-insoluble proton-conducting polymers that comprise an interpenetrating polymer network consisting of a host polymer and a guest polymer, and the method for the preparation thereof. This polymeric network possesses flexible and mechanically stable films, which are used as a proton conducting membrane in PEM-based fuel cells.

Moreover, the hybrid membrane of the present invention not only has excellent water permeability but also possesses attractive water retention properties at elevated temperatures. Accordingly, the hybrid membrane comprising PVA-PSSA could be useful for PEM-based fuel cells.

Using as samples in the fuel cell applications, the proton conductivity of the hybrid membranes of the present invention is measured as follows.

The proton conductivity measurements are performed on the membranes in a two-probe cell using ac impedance technique. The conductivity cell comprises two stainless steel electrodes each of 20 mm diameter. The membrane sample is sandwiched in between these two stainless steel electrodes fixed in a Teflon block and kept in a closed glass container. The test is conducted between room temperature (~ 30°C) and 130°C in the glass container with provision to heat. Constant monitoring of temperature is observed with a thermometer kept inside the container close to the membrane. Similarly, humidity control in the test container is maintained using concentrated salt solutions at room temperature. To achieve 100% RH value, de-ionized water is used. Saturated (NH₄)₂ SO₄ solution is used to achieve 80% RH, saturated NaNO₂ solution is used to produce 66% RH, saturated CaCl₂ solution is used to produce 30% RH, and for 0% RH environment, solid P₂O₅ is kept at the bottom of the closed container. The ac impedance spectra of the membranes are recorded in the frequency range between 1 MHz and 10 Hz with 10 mV amplitude using an Autolab PGSTAT 30 instrument. The resistance value associated with the membrane conductivity is determined from the high-frequency intercept of the impedance with the real axis and the proton conductivity of the membrane is calculated there from. The hybrid membranes of the present invention show excellent proton conductivity, nearly similar to the commercially available Nafion^{®} membranes, and will be discussed further in Example 1 of the present invention.

Using as samples for direct methanol fuel cells, the present membranes are also studied for barrier to methanol crossover. For measurement of methanol crossover for these membranes, experiments are carried out in a two-compartment glass cell with the membrane in between. The aqueous 2M methanol solution mixed with 0.5M H₂SO₄ is introduced on the left side (side 1) of the two compartment cell and 0.5 M H₂SO₄ solution is placed on the right side (side 2). Methanol permeates from side 1 to side 2 through the membrane. Smooth platinum electrodes are used as the working and counter electrodes. An Hg | Hg₂SO₄ reference electrode is used throughout. Cyclic voltammograms (CV) are recorded using SOLARTRON analytical 1480 Multistat to study the methanol permeability of the membrane qualitatively. The initial voltage and the potential steps are 0 mV and 0.3 mV vs. the Hg | Hg₂SO₄ reference electrode, respectively. The final data are recorded after reaching equilibrium, which is usually about 5h. The methanol permeating through the membrane is detected from the methanol oxidation currents measured through cyclic voltammetry. It is seen that the methanol oxidation limiting current for pristine PVA membrane is 0.49 mA/cm², whereas the methanol oxidation limiting current for Nafion-117 is found to be 0.84 mA/cm². Lower methanol oxidation current obtained for PVA membrane is an embodiment of the present invention. Interestingly, little difference is seen between the methanol oxidation peaks for pristine PVA and PVA-PSSA hybrid membranes.

The solid polymer electrolyte membranes of the present invention exhibit excellent proton conductivity and methanol barrier property, and hence are attractive as solid polymer electrolyte membrane materials for PEM-based fuel cells, the anodes of which are separately fed with gaseous hydrogen and aqueous methanol solution; the performance of the present membrane in PEFC and DMFC will be discussed in more details in Examples 2 and 3, respectively.

The utility of the present membrane is also evaluated in PEM-based fuel cells, the anodes of which are fed with alkaline aqueous sodium borohydride solution. The performance of the present membrane in such a PEM-based fuel cell will be discussed in Example 4.

The present invention will be illustrated with reference to examples in more details below, but these examples are not intended to limit the scope of the present invention. Parts and percentages in the examples and comparative examples are on a weight basis, unless otherwise specified. Various evaluations are conducted as follows.

The following examples are given by the way of illustration and therefore should not be construed to limit the scope of the invention.

### Example 1

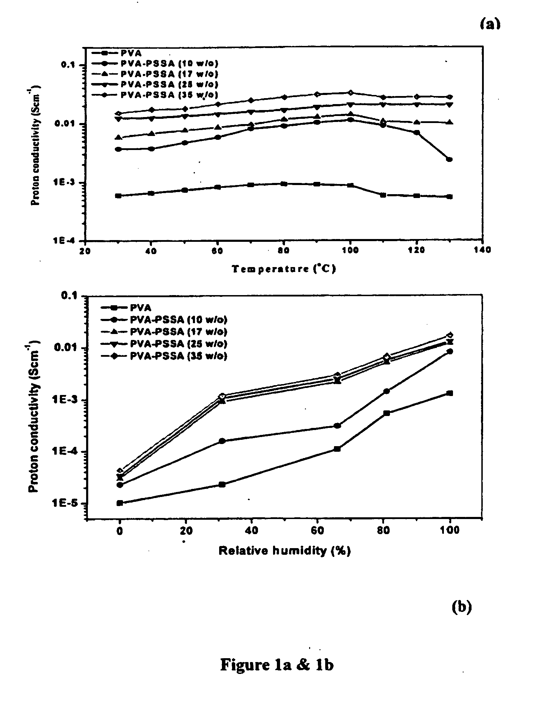

Proton conductivity data for pristine PVA and PVA-PSSA hybrid membranes as a function of temperature are shown in Fig. 1(a). The proton conductivity for pristine PVA membrane increases with temperature and attains a maximum value of 9.4 × 10⁻⁴ S/cm at 80°C; a decrease in conductivity is observed beyond 80°C. The proton conductivity for PVA-PSSA hybrid membranes increases with the PSSA content. It is realized that the proton conductivity for PVA-35 weight % of PSSA is maximum at 100°C beyond which the conductivity decreases. The proton conductivities of PVA and PVA-PSSA hybrid membranes are also evaluated as a function of RH as shown in Fig. 1(b). The proton conductivity for pristine PVA membrane in fully humidified condition is 1.3 × 10⁻³ S/cm at 30°C. But, the conductivity decreases gradually with the decrease in RH. At 0% RH, the conductivity of pristine PVA membrane is found to be ∼ 10⁻⁵ S/cm. The proton conductivity for the PVA-PSSA hybrid membrane increases with increase in PSSA content at all RH values. In fully humidified condition, the maximum proton conductivity of 1.66 × 10⁻² S/cm is exhibited by PVA-35 weight % of PSSA hybrid membrane. Akin to the pristine PVA membrane, the proton conductivity for PVA-PSSA hybrid membranes of all compositions decreases with decrease in RH. However, the conductivity of the hybrid membrane is much higher than the pristine PVA membrane at all RH values. It is seen from the data that, at 30% RH, the conductivity for PVA-35 weight % of PSSA hybrid membrane is about two orders of magnitude higher than the conductivity values for pristine PVA membrane. In general, during the chemical treatment, hydroxyl groups in PVA matrix tend to cross-link with glutaraldehyde to generate a hydrophobic domain providing the polymer a stable morphology that prevents the polymer from interdispersing in water. The hydrogen bonds between OH in PVA and SO₃H in PSSA are formed due to the decrease in the distance between the polymer chains. This physical interaction between the functional groups results in the formation of hydrophilic ionic channels (or micro domains) by the arrangement of hydrophilic polymeric groups that facilitates proton conduction.

The temperature dependence of proton conductivity for PVA and PVA-PSSA hybrid membranes is Arrhenius type, suggesting thermally activated proton conduction. The activation energy (Eₐ), which is the minimum energy required for proton transport, for each membrane is also calculated and compared. As proton conductivity is thermally activated, it is reasonable to expect a rise in conductivity with temperature. The decay in the conductivity values above 80°C is observed for PVA membrane suggesting its dehydration. Accordingly, not only the capacity of water uptake but also the capacity of the membrane to retain water at higher temperatures is seminal for the proton conductivity. Eₐ values for PVA-PSSA hybrid membranes are higher (10 - 16 kJ/mol) compared to the Eₐ value of 8.8 kJ/mol for pristine PVA membrane. In other words, Eₐ value for proton conduction increased with the induction of PSSA particles into PVA matrix. This can be explained by the existence of free water and bound water contained in the present membranes. As mentioned above, the ratio of free water to bound water is higher in the PVA membrane than the PVA-PSSA hybrid membrane. According to vehicle mechanism, free water can act as a proton-carrying medium. However, free water evaporates faster than bound water and, accordingly, the proton conductivity of pristine PVA membrane falls beyond 80°C due to loss of free water. By contrast, PVA-PSSA hybrid membranes have higher bound water content than the pristine PVA membrane. Thus, in the case of PVA-PSSA hybrid membrane, the proton conductivity increases with temperature up to 100°C owing to good water retention. A decrease in proton conductivity beyond 100°C indicates the loss of bound water hydrogen bonded between PVA and PSSA molecules. The aforesaid aspects of PVA-PSSA hybrid membranes are more conducive to PEFCs operating at elevated temperatures in relation to PEFCs employing pristine PVA membrane.

### Example 2

After ascertaining good proton conductivity for the present PVA-PSSA hybrid membranes, the membranes are used for making Membrane Electrode Assemblies (MEAs), and the performance of these MEAs are analyzed and compared with the MEA comprising pristine PVA in a conventional PEM-based fuel cell, the anode of which is fed with hydrogen. The details of the MEA preparation are described below.

The following five membranes and single cells are separately prepared and the thickness of all the membranes is adjusted to about 150 micron. Toray carbon paper of 0.28 mm in thickness is used for the backing layer. To the backing layer, 1.5 mg/cm² of Vulcan XC72R carbon slurry is applied by brushing method. In-house prepared Vulcan XC72R carbon-supported 40 wt.% Pt catalyst is coated onto it by the same method. The catalyst loading on both the electrodes (active area = 25cm²) is kept at 0.5 mg/cm². MEA is obtained by hot pressing the membrane sandwiched between the cathode and anode under the compaction pressure of 15 kN (~60 kg/cm²) at 80°C for 3 minutes. MEA thus prepared is loaded in the single cell test fixture and its performance is evaluated.
1. Cell A: PVA-PSSA hybrid membrane is prepared in accordance with the above method. PSSA content in this membrane is adjusted to 10 weight % of PVA.
2. Cell B: PVA-PSSA hybrid membrane is prepared in accordance with the above method. PSSA content in this membrane is adjusted to 17 weight % of PVA.
3. Cell C: PVA-PSSA hybrid membrane is prepared in accordance with the above method. PSSA content in this membrane is adjusted to 25 weight % of PVA.
4. Cell D: PVA-PSSA hybrid membrane is prepared in accordance with the above method. PSSA content in this membrane is adjusted to 35 weight % of PVA.
5. Cell E: PVA polymer electrolyte membrane prepared in accordance with the above method is used for comparison.

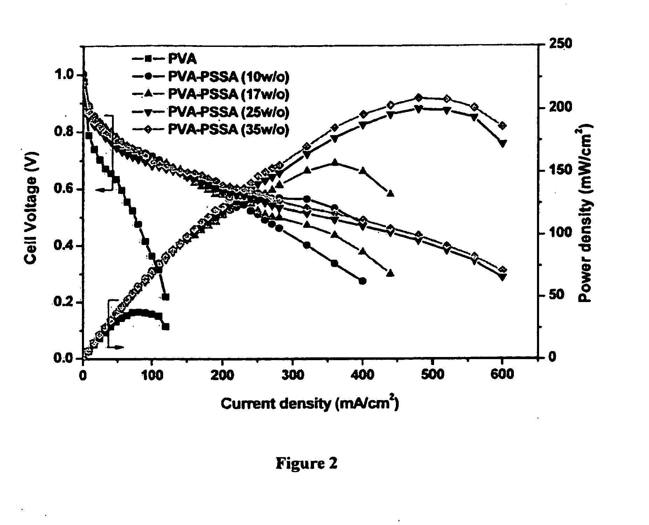

High humidification of the cell (- 100% RH) is maintained by passing gaseous hydrogen and gaseous oxygen reactants to anode and cathode sides of the cell, respectively, through a humidification chamber containing de-ionized water. The temperature of the humidification chamber is maintained at 90°C. Hot and wet hydrogen and oxygen gases are passed to anode and cathode sides of the cell, respectively, at a flow rate of 1 lit/min employing a mass-flow controller. The current densities and power densities for all the five cells are measured at a cell temperature of 80°C under atmospheric pressure and the results are shown in Figure 2.

From Fig. 2, it is seen that the hybrid membranes with varying PSSA content show better performance than the pristine PVA membrane. The ohmic resistance values for the cells with PVA-PSSA hybrid membranes are lower in relation to pristine PVA membrane. A peak power density of 210 mW/cm² for the PEFC is achieved with PVA-35 weight % of PSSA hybrid membrane as compared to - 40 mW/cm² obtained for the PEFC with pristine PVA membrane under identical operating conditions. It is obvious that the existence of PSSA as a good proton conductor in the PVA matrix assists the hybrid membranes to achieve higher proton conductivity. Proton conductivity in the hybrid membranes is attributed to proton transfer through hydrogen bonding with water-filled ion pores. There is little variation in proton conductivity of hybrid membranes with PSSA content of 25 weight % of and 35 weight % of at varying temperatures and RH values. Therefore, in this study, the maximum PSSA content is limited to 35 weight % of. It is also apparent from the cell polarization data that the early mass-transfer problem observed for PVA membrane is mitigated for the PVA-PSSA hybrid membranes, primarily due to improved proton conductivity and high water uptake of the hybrid membranes, which facilitates the product water in hydrating the membranes by back diffusion.

### Example 3

PVA and PVA-PSSA hybrid membranes reduce methanol crossover explained above as an embodiment of the present invention. Hence, it is desired to conduct the performance of these membranes after making MEAs in the PEM-based fuel cell, the anode of which is fed with aqueous methanol and the performance compared with a similar cell employing commercially available Nafion-117 membrane, the most commonly used membrane for the DMFC. The details of the MEAs preparation for the DMFC are described below.

The MEA preparation and its assembly in single cell text fixture for the DMFCs are similar to Example 2. However, the catalyst loading on both the anode (Pt/Ru 1:1 of 60 wt.%) and the cathode (in-house prepared 40 Pt/C) are kept at 2 mg/cm². The active area for the DMFCs is 4 cm². The following three MEAs comprising membranes of the present invention are prepared separately and assembled in a DMFC single cell.
1. Cell A: PVA-PSSA hybrid membrane is prepared in accordance with the above method. PSSA content in this membrane is adjusted to 25 weight % of PVA.
2. Cell B: PVA polymer electrolyte membrane prepared in accordance with the above method is employed for comparison.
3. Cell C: Nafion-117 membrane procured from DuPont is employed for further comparison.

2M aqueous methanol is heated to - 80°C and fed to the anode side of the fuel cell through a peristatic pump. Gaseous oxygen at 3 atmospheres is passed to the cathode side of the fuel cell through a humidification chamber as discussed in Example 2. The polarization curves for MEAs comprising Nafion-117, pristine PVA and PVA-PSSA hybrid membranes are obtained at 80°C a fuel cell. A peak power density of 18 mW/cm² at a load current density of 80 mA/cm² is obtained for the MEA comprising Nafion-117 membrane. The peak power density of about 5 mW/cm² at a load-current density of 20 mA/cm² is obtained for the MEA comprising pristine PVA membrane. By contrast, a power density of 33 mW/cm² at a load current density of 150mA/cm² is observed for PVA-25 weight % of PSSA hybrid membrane under identical operating conditions. It is obvious that the existence of PSSA assists the hybrid membrane to achieve higher proton conductivity furthering the performance of the DMFC. Although, methanol crossover for pristine PVA is lesser than Nafion-117, the performance of the pristine PVA is lower than the performance of Nafion-117 membrane.

### Example 4

Pristine PVA and PVA-PSSA hybrid membranes are also evaluated in a PEM-based fuel cell, the anode of which is fed with alkaline aqueous sodium borohydride solution. The preparation of the MEAs for such a PEM-based fuel cell is described below.

Mₘ (misch metal) Ni_{3.6}Al_{0.4}Mn_{0.3}Co_{0.7} (Mₘ = La-30 wt.%, Ce-50 wt.%, Nd-15 wt.%, Pr-5 wt.%) is used as the anode catalyst. MₘNi_{3.6}Al_{0.4}Mn_{0.3}Co_{0.7} alloy is prepared by arc-melting stoichiometric amounts of the constituent metals in a water-cooled copper crucible under argon atmosphere. The alloy ingot thus obtained is mechanically pulverized as a fine powder. To prepare the anode catalyst layer, a slurry is obtained by agitating the required amount of alloy powder with 5 wt.% Vulcan XC-72R carbon and 10 wt.% of aqueous PVA solution in an ultrasonic water bath. The resultant slurry is then pasted on a 0.15 mm thick 316L stainless steel mesh (mesh no-120) to make the anode. The alloy catalyst loading of 30 mg/cm² is kept identical for all the anodes. A gold-coated (thickness 1 µm) stainless steel mesh is used as a cathode. MEAs are prepared by hot-pressing cathode and anode of active area 9cm² placed on either side of the pristine PVA and PVA-PSSA hybrid membranes at 60 kg/cm² at 80°C for 3 min.

Liquid-fed PEM-based fuel cells are assembled with various MEAs. The anode and cathode of the MEAs are contacted on their rear with fluid flow-field plates machined from high-density graphite blocks with perforation. The areas between the perforations make electrical contact on the rear of the electrodes and conduct the current to the external circuit. The perforations serve to supply aqueous alkaline sodium borohydride solution to the anode and acidified hydrogen peroxide to the cathode. After installing single cells in the test station, galvanostatic polarization data for various PEM-based fuel cells with borohydride fuel are obtained at 30°C.

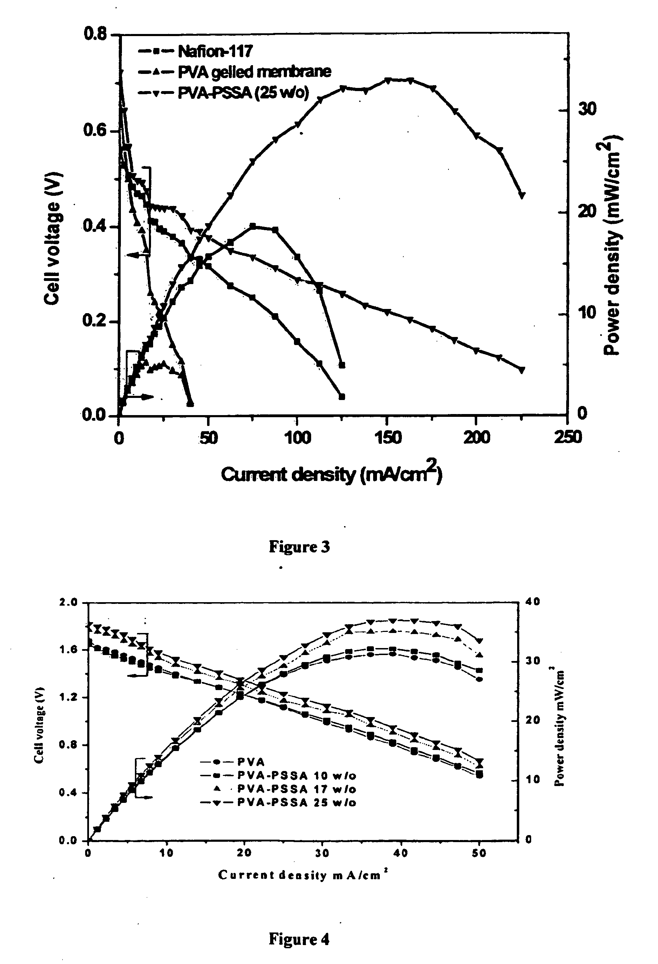

Fig. 4 shows the polarization curves of MEAs comprising pristine PVA and PVA-PSSA hybrid membranes at 30°C. Among these, PVA-PSSA hybrid membrane shows better performance than those with PVA membranes. A peak power density of 38 mW/cm² at a load current-density of 40 mA/cm² is obtained with PVA-25 weight % of PSSA hybrid membrane as compared to 30 mW/cm² with PVA membrane at the same load current-density under identical operating conditions. It is obvious that the existence of polystyrene sulfonic acid as a proton conducting media assists the PVA-PSSA composite membrane to achieve higher proton conductivity in relation to PVA membrane.

In practice, for all types of fuel cells, pristine PVA membrane may encounter large interfacial resistance because of the poor adhesion between PVA film and catalyzed electrodes. However, in case of the hybrid membrane, its surface roughness, as analyzed from the scanning electron microscopy study, helps increasing the adhesion and three-phase contact between electrodes and the membrane. Accordingly, PEFCs with PVA-PSSA hybrid membranes exhibit improved performance. Although the PEFC with PVA-PSSA hybrid membrane delivers only a little lower power density than those employing Nafion membranes, PVA-PSSA hybrid membranes described in this study provide an option to tailor hydrophilic-hydrophobic regions in the membrane depending on the operating condition of the PEM based fuel cells.

**Advantages:** The invention provides a method to fabricate chemically cross-linked proton conducting polymer electrolyte membrane with high proton conductivity and good water uptake properties. The membrane has an effective utility in PEM-based fuel cells, the anodes of which are fed separately with gaseous hydrogen, aqueous methanol solution and alkaline aqueous sodium borohydride solution.

Moreover, the hybrid membrane of the present invention not only has excellent water permeability but also possesses attractive water retention properties at elevated temperatures.

## Claims

1. A process for the preparation of proton conducting polymer electrolyte membrane which comprises preparing an aqueous solution of host polymer, adding gradually an aqueous solution of 20-30% cross-linking agent to the above solution of host polymer, under stirring, for a period of 3-4 hr to obtain the chemically cross-linked host polymer with dialdehyde cross-linking agent, adding aqueous solution of the sodium salt of guest polymer to the above said solution of cross-linked host polymer, at a temperature of 25-30°C and stirring it till a homogeneous slurry is obtained and casting the resultant admixture on a smooth flat substrate, followed by removing the solvent and curing it to obtain a hybrid membrane, dipping the resultant hybrid membrane in aqueous solution of about 1M H₂SO₄, at a temperature of 25-30°C, for a period of 30-60 minutes, followed by washing with water to expel the residual H₂SO₄ to obtain the desired hybrid proton conducting polymer electrolyte membrane.

2. The process according to claim 1, wherein the host polymer used is elected from the group consisting of poly (vinyl alcohol) (PVA), poly (vinyl fluoride), polyethylene oxide, polyethyleneimine, polyethylene glycol and polyvinylmethylethyl ether.

3. The process according to claim 1, wherein the dialdehyde cross-linking agent used for cross linking the host polymer is selected from glyoxal and glutaraldehyde.

4. The process according to claim 1, wherein the guest polymer used is selected from the group consisting of poly(styrene sulfonic acid) (PSSA), poly(acrylic acid), sulfonated phenolic, polyacrylonitrile, polymethyl acrylate, and quaternary ammonium salt.

5. The process according to anyone of claims 1-4, wherein the host polymer is PVA and the guest polymer is PSSA.

6. A hybrid proton conducting polymer electrolyte membrane obtainable by the process of anyone of claims 1-5.

7. Use of a proton conducting polymer electrolyte membrane according to claim 6 for making polymer electrolyte membrane fuel cells.

8. Use of a proton conducting polymer electrolyte membrane according to claim 6 is useful in polymer electrolyte membrane fuel cell where gaseous hydrogen is used as fuel, at a cell temperature of 80°C under humidified condition and at atmospheric pressures.

9. Use of a proton conducting polymer electrolyte membrane according to claim 6 in a polymer electrolyte membrane fuel cell where aqueous 2M-methanol solution is used as a fuel, at a cell temperature of 80°C.

10. Use of a proton conducting polymer electrolyte membrane according to claim 6 in a polymer electrolyte membrane fuel cell where aqueous alkaline sodium borohydride solution is used as a fuel, at a cell temperature of 30°C.

## Patentansprüche

1. Verfahren zur Herstellung einer protonenleitenden Polymerelektrolytmembran, umfassend das Herstellen einer wässrigen Lösung von Wirtspolymer, schrittweises Zusetzen einer wässrigen Lösung von 20 bis 30 % Vernetzungsmittel zur oben genannten Lösung des Wirtspolymers unter Rühren für einen Zeitraum von 3-4 Stunden, um das chemisch vernetzte Wirtspolymer mit Dialdehydvernetzungsmittel zu erhalten, Zusetzen von wässriger Lösung des Natriumsalzes von Gastpolymer zur oben genannten Lösung von vernetztem Wirtspolymer bei einer Temperatur von 25-30°C und Rühren bis eine homogene Aufschlämmung erhalten wird, und Ausgießen der resultierenden Mischung auf ein glattes flaches Substrat, gefolgt von Entfernung des Lösungsmittels und dessen Aushärtung um eine Hybridmembran zu erhalten, Eintauchen der resultierenden Hybridmembran in wässrige Lösung von etwa 1M H₂SO₄ bei einer Temperatur von 25-30°C für einen Zeitraum von 30-60 Minuten, gefolgt von Waschen mit Wasser, um die restliche H₂SO₄ auszutreiben, um die erwünschte Hybrid-protonenleitende Polymerelektrolytmembran zu erhalten.

2. Verfahren nach Anspruch 1, wobei das verwendete Wirtspolymer ausgewählt ist aus der Gruppe bestehend aus Polyvinylalkohol (PVA), Polyvinylfluorid, Polyethylenoxid, Polyethylenimin, Polyethylenglykol und Polyvinylmethylethylether.

3. Verfahren nach Anspruch 1, wobei das Dialdehydvernetzungsmittel, das zum Vernetzen des Wirtspolymers verwendet wird ausgewählt ist aus Glyoxal und Glutaraldehyd.

4. Verfahren nach Anspruch 1, wobei das verwendete Gastpolymer ausgewählt ist der Gruppe bestehend aus Polystyrolsulfonsäure (PSSA), Polyacrylsäure, sulfoniertes Phenol, Polyacrylnitril, Polymethylacrylat und quaternärem Ammoniumsalz.

5. Verfahren nach einem der Ansprüche 1 bis 4, wobei das Wirtspolymer PVA und das Gastpolymer PSSA ist.

6. Eine protonenleitende Hybrid-Polymerelektrolytmembran erhältlich durch das Verfahren nach einem der Ansprüche 1 bis 5.

7. Verwendung einer protonenleitenden Polymerelektrolytmembran gemäß Anspruch 6 zum Herstellen von Polymerelektrolytmembran-Brennstoffzellen.

8. Verwendung einer protonenleitenden Polymerelektrolytmembran nach Anspruch 6 in einer Polymerelektrolytmembran-Brennstoffzelle, worin gasförmiger Wasserstoff als Brennstoff verwendet wird, bei einer Zellentemperatur von 80°C unter angefeuchteter Bedingung und bei Atmosphärendrücken.

9. Verwendung einer protonenleitenden Polymerelektrolytmembran nach Anspruch 6 in einer Polymerelektrolytmembran-Brennstoffzelle, worin eine wässrige 2M-Methanollösung als Brennstoff verwendet wird, bei einer Zellentemperatur von 80°C.

10. Verwendung einer protonenleitenden Polymerelektrolytmembran nach Anspruch 6, in einer Polymerelektrolytmembran-Brennstoffzelle, worin wässrige basische Natriumborhydridlösung als Brennstoff verwendet wird, bei einer Zellentemperatur von 30°C.

## Revendications

1. Procédé pour la préparation d'une membrane électrolytique conductrice de protons en polymère qui comporte les étapes consistant à préparer une solution aqueuse d'un polymère hôte, ajouter graduellement une solution aqueuse de 20 à 30 % d'agent de réticulation à la solution de polymère hôte ci-dessus, sous agitation, pendant une période de 3 à 4 h pour obtenir le polymère hôte chimiquement réticulé avec un agent de réticulation à base de dialdéhyde, ajouter une solution aqueuse de sel de sodium d'un polymère invité à ladite solution de polymère hôte réticulé ci-dessus, à une température de 25 à 30 °C et l'agiter jusqu'à ce qu'une pâte homogène soit obtenue et faire couler le mélange résultant sur un substrat plat et lisse, puis retirer le solvant et le faire durcir pour obtenir une membrane hybride, tremper la membrane hybride résultante dans une solution aqueuse de H₂SO₄ à 1 M environ, à une température de 25 à 30 °C, pendant une période de 30 à 60 minutes, puis effectuer un lavage à l'eau pour expulser le H₂SO₄ résiduel afin d'obtenir la membrane électrolytique conductrice de protons en polymère.

2. Procédé selon la revendication 1, dans lequel le polymère hôte utilisé est choisi parmi le groupe constitué par du poly(alcool vinylique) (PVA), du poly(fluorure vinylique), de l'oxyde de polyéthylène, du polyéthylènimine, du polyéthylène glycol et du polyvinylméthyléthyle-éther.

3. Procédé selon la revendication 1, dans lequel l'agent de réticulation à base de dialdéhyde utilisé pour la réticulation du polymère hôte est choisi parmi le glyoxal et le glutaraldhéhyde.

4. Procédé selon la revendication 1, dans lequel le polymère invité utilisé est choisi parmi le groupe constitué de l'acide poly(styrène sulfonique) (PSSA), l'acide poly(acrylique), l'acide phénolique sulfoné, le polyacrylonitrile, l'acrylate de polyméthyle et un sel d'ammonium quaternaire.

5. Procédé selon l'une quelconque des revendications 1 à 4, dans lequel le polymère hôte est le PVA et le polymère invité est le PSSA.

6. Membrane hybride électrolytique conductrice de protons en polymère pouvant être obtenue par le procédé selon l'une quelconque des revendications 1 à 5.

7. Utilisation d'une membrane d'électrolyte polymère conductrice de protons selon la revendication 6 pour fabriquer des piles à combustible à membrane électrolytique en polymère.

8. Utilisation d'une membrane électrolytique conductrice de protons en polymère selon la revendication 6 dans une pile à combustible à membrane électrolytique en polymère où de l'hydrogène gazeux est utilisé comme combustible, à une température de pile de 80 °C dans des conditions humidifiées et à des pressions atmosphériques.

9. Utilisation d'une membrane électrolytique conductrice de protons en polymère selon la revendication 6 dans une pile à combustible à membrane électrolytique en polymère où une solution aqueuse de méthanol 2M est utilisée comme combustible, à une température de pile de 80 °C.

10. Utilisation d'une membrane d'électrolyte polymère conductrice de protons selon la revendication 6 dans une pile à combustible à membrane électrolytique en polymère où une solution alcaline aqueuse de borohydrure de sodium est utilisée comme combustible, à une température de pile de 30 °C.
